(19) Europäisches Patentamt
European Patent Office
Office européen des brevets

(11) EP 0 588 686 B1

(12) **FASCICULE DE BREVET EUROPEEN**

(45) Date de publication et mention de la délivrance du brevet:
**15.10.1997 Bulletin 1997/42**

(51) Int Cl.6: **G06F 3/00**, G06F 3/033

(21) Numéro de dépôt: **93402174.2**

(22) Date de dépôt: **07.09.1993**

(54) **Procédé de dialogue gestuel multimode dans un environnement virtuel**

Verfahren für multimodalen Gebärdendialog in einer virtuellen Umwelt

Method for multimode gesture dialog in a virtual environment

(84) Etats contractants désignés:
**BE DE GB NL**

(30) Priorité: **15.09.1992 FR 9210962**

(43) Date de publication de la demande:
**23.03.1994 Bulletin 1994/12**

(73) Titulaire: **SEXTANT AVIONIQUE**
**F-92360 Meudon-la-Forêt (FR)**

(72) Inventeurs:
- **Barbier, Bruno**
  **F-92402 Courbevoie Cédex (FR)**
- **Favot, Jean-Jacques**
  **F-92402 Courbevoie Cédex (FR)**
- **Lach, Patrick**
  **F-92402 Courbevoie Cédex (FR)**
- **Perbet, Jean-Noel**
  **F-92402 Courbevoie Cédex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
**EP-A- 0 450 196**

- **IEICE TRANSACTIONS ON FUNDAMENTALS OF ELECTRONICS, COMMUNICATIONS AND COMPUTER SCIENCES vol. E75-A, no. 2 , Février 1992 , TOKYO, JP pages 112 - 121 T. KUROKAWA 'Gesture Coding and a Gesture Dictionary for a Nonverbal Interface'**
- **SYSTEMS AND COMPUTERS IN JAPAN vol. 23, no. 3 , 1992 , NEW YORK, US pages 38 - 48 T. TAKAHASHI ET F. KISHINO 'A Hand Gesture Recognition Method and Its Application'**
- **PROCEEDINGS OF THE 1ST INTERNATIONAL CONFERENCE ON COMPUTER WORKSTATIONS 11 Novembre 1985 , SAN JOSE, CA, US pages 90 - 98 P.P. TANNER ET AL. 'The user interface of Adagio, a robotics multitasking multiprocessor workstation'**
- **NTIS TECH NOTES Mai 1990 , SPRINGFIELD, VA, US page 413 NASA'S JET PROPULSION LABORATORY 'Force-Feedback Cursor Control'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 588 686 B1

## Description

La présente invention concerne un procédé de dialogue gestuel multimode dans un environnement virtuel. Elle s'applique notamment à des environnements virtuels comportant des moyens d'interaction gestuels entre un ou plusieurs opérateurs et une machine, le dialogue gestuel étant par exemple basé sur le geste d'une main ou sur la position de la main dans l'espace.

L'apparition sur le marché de systèmes capables de reconnaître des gestes, et de localiser dans l'espace la position de la main d'un opérateur par exemple, a permis le développement du dialogue gestuel dans les interactions homme-machine. Dans le cas de reconnaissance de gestes de la main, la communication gestuelle est établie par l'intermédiaire de gants numériques connus de l'homme du métier. Ces systèmes fournissent alors généralement des informations sur la position, l'orientation et la forme de la main à intervalles de temps régulier, par exemple des intervalles de quelques dizaines de millisecondes. La position de la main est reconnue suivant un repère fixe orthonormé par un système de coordonnées cartésiennes (x, y, z), l'orientation de la main est repérée par trois angles $\psi$, $\theta$, $\Phi$, et la forme de la main est estimée par les angles de flexion des deux articulations principales de chacun des cinq doigts. Par ailleurs, certains systèmes ont la capacité de reconnaissance de posture par comparaison des valeurs des angles de flexion des articulations avec des tables préenregistrées définissant les postures à identifier. Ils fournissent le code de la posture reconnue.

Cependant, la reconnaissance de posture ne permet pas l'élaboration d'un dialogue gestuel suffisamment riche pour certaines applications. En effet, un tel mode de communication reste trop limitatif à cause notamment du nombre limité de postures possibles, celles-ci pouvant signifier par exemple un acquiescement, un arrêt ou changement de procédure, quelques nombres représentatifs.

Le but de l'invention est de pallier cet inconvénient, notamment en dotant un système standard de dialogue gestuel de plusieurs modes de fonctionnement sélectables instantanément, le geste étant considéré ici comme un mouvement, une posture ou une position dans l'espace d'une partie ou de tout le corps de l'opérateur.

A cet effet, l'invention a pour objet un procédé de dialogue gestuel dans un environnement virtuel utilisant des moyens de communication gestuelle dont l'état est défini par un ensemble de paramètres, caractérisé en ce qu'il utilise au moins deux modes de fonctionnement mutuellement exclusifs et affectés d'un ordre de priorité, le passage d'un mode à un autre étant provoqué par une étape de franchissement d'une frontière par les moyens de communication gestuelle, une frontière étant définie par la valeur d'un ou plusieurs paramètres de l'ensemble.

L'invention a pour principaux avantages qu'elle améliore l'ergonomie générale et l'efficacité de systèmes interactifs homme-machine notamment en permettant un dialogue gestuel à la fois plus riche et plus naturel, qu'elle s'adapte à tous systèmes virtuels comprenant des moyens gestuels de communication, qu'elle n'augmente pas de façon excessive la taille des logiciels d'application et que son exploitation est économique.

D'autres caractéristiques et avantages de l'invention apparaîtront à l'aide de la description qui est faite en regard des dessins annexés qui représentent :

- la figure 1, un système standard de reconnaissance gestuelle selon l'art antérieur ;
- la figure 2, une illustration d'un procédé de dialogue gestuel selon l'invention ;
- les figures 3a et 3b, des exemples de frontières ;
- les figures 5 et 6, des modes de fonctionnement du procédé de dialogue gestuel selon l'invention ;
- la figure 6, un exemple d'application du procédé de dialogue gestuel selon l'invention ;
- la figure 7, un algorithme de sélection des modes de fonctionnement du procédé selon l'invention ;
- la figure 8, un réseau de Pétri décrivant la génération des actions des modes de fonctionnement du procédé selon l'invention.

La figure 1 présente un système standard de reconnaissance gestuelle selon l'art antérieur. Les gestes reconnus sont en général ceux d'une main 1 pour des raisons d'ergonomie évidentes, de nombre de possibilités de postures et de facilité de mise en oeuvre. Les postures de la main 1 sont repérées par un capteur 2. Celui-ci comprend notamment un gant numérique, connu de l'homme du métier, dans lequel se positionne la main. Ce type de capteur 2 comprend en outre un système pour le repérage dans l'espace constitué d'un émetteur électromagnétique et d'un récepteur de même type placé par exemple sur le poignet. Le gant est recouvert de fibres optiques pour la mesure de la flexion des doigts. Une unité de contrôle traite les données, celles-ci étant fournies à un système de reconnaissance gestuelle 3, lequel fournit à une unité de traitement interactif un message 4 décrivant par exemple la position et l'orientation de la main 1 ainsi que la flexion des doigts. La position de la main est repérée par trois coordonnées spatiales X, Y, Z dans un système orthonormé. L'orientation est définie par les trois angles d'orientation connus $\psi$, $\theta$, $\Phi$ représentant respectivement le lacet, le tangage et le roulis. Enfin, les fibres optiques parcourant les dix articulations des doigts, deux par doigt, fournissent des valeurs des angles flexion $\alpha_1$, $\alpha_2$, $\alpha_3$, $\alpha_4$, $\alpha_5$, $\alpha_6$, $\alpha_7$, $\alpha_8$, $\alpha_9$, $\alpha_{10}$, de chaque articulation. La reconnaissance de la posture de la main 1 se fait par exemple par comparaison des angles de flexion des articulations avec des tables mémorisées définissant les postures à identifier, le système de reconnaissance 3 fournissant par exemple un numéro de code correspondant à la posture identifiée. Un tel système de dialogue gestuel est trop limité, notamment à cause du nombre limité de postures possibles identifiables.

La figure 2 illustre un procédé de dialogue gestuel selon l'invention. A titre d'exemple les moyens de communication gestuel 1 sont toujours représentés par une main, néanmoins d'autres moyens pourraient être utilisés à condition de disposer d'un capteur 2 adapté. Les messages 4 délivrés par le système de reconnaissance gestuelle, lequel est relié au capteur 2, sont par exemple les mêmes que ceux développés précédemment. Ces messages décrivent l'état de la main 1 au moyen des paramètres précédemment définis à savoir les trois coordonnés spatiales X, Y, Z, les trois angles d'orientation ,$\psi$, $\theta$, $\Phi$ et les dix angles de flexion $\alpha_1$ à $\alpha_{10}$, soit par exemple au moins 16 paramètres indépendants. Ces paramètres permettent de sélectionner des fonctions 5 appartenant à au moins deux modes de fonctionnement différents, mutuellement exclusifs et affectés d'un ordre de priorité. A titre d'exemple, et pour réaliser un dialogue le plus riche et le plus naturel possible, le procédé de dialogue illustré par la figure 2 comprend quatre modes de fonctionnement : un premier mode de commande virtuelle, un deuxième mode de désignation d'objets virtuels ou fonctions, un troisième mode de sélection dans un menu et un quatrième mode de reconnaissance de posture, les ordres de priorité allant par exemple décroissant du premier mode au quatrième mode. Le passage d'un mode à un autre se fait par une étape de franchissement d'une frontière 6 par la main. Une frontière étant définie dans l'espace d'évolution de la main 1 par la valeur d'un paramètre ou d'une combinaison de paramètres. Les frontières peuvent être délimitées par une distance, un angle, une surface, un volume ou une posture par exemple, un mode étant alors sélectionné par le franchissement d'une distance, d'une surface ou d'un volume, ou par un changement d'angle ou de posture. Une fonction sélectionnée, dans un mode donné, dépend donc non seulement des paramètres X, Y, Z, $\psi$, $\theta$, $\Phi$, $\alpha_1$ à $\alpha_{10}$ définissant l'état de la main 1 mais de sa position par rapport à des frontières prédéfinies, le passage d'un mode à l'autre se faisant par franchissement d'une de ces frontières. Dans un cas d'utilisation de moyens de communication gestuelle autre que la main, la frontière peut être définie plus globalement dans l'espace d'évolution de l'opérateur. Les paramètres délimitant les frontières sont liés à la position de l'opérateur dans son espace d'évolution. Dans le cas d'une application à plusieurs opérateurs par exemple, une zône définie par des frontières peut être allouée à chaque opérateur. Ces frontières peuvent par exemple être modifiées, évoluer, en fonction du temps.

Les figures 3a et 3b illustrent un exemple de frontière, celle-ci définissant un volume 7. En figure 3a, la main 1 étant à l'extérieur du volume 7, elle pointe selon une direction 8 un point, confirmé par un retour visuel 9, d'un écran 10 sur lequel est représenté par exemple un objet 11. Cet écran peut être appelé interactif car il est en interaction avec l'opérateur. A l'extérieur de ce volume 7, la main étant dans un mode donné, elle ne peut pas par exemple capturer virtuellement l'objet 11, quelque soit sa posture. Elle peut par exemple désigner le point 9 ou l'objet 11. En revanche, quand la main 1 se situe à l'intérieur du volume 7, comme le montre la figure 3b, elle peut, par une posture déterminée, capturer virtuellement l'objet 11, cette dernière fonction faisant partie du mode de commande virtuelle.

Comme cela a été indiqué précédemment, le mode de commande virtuelle est par exemple le plus prioritaire, le moins prioritaire étant le mode de reconnaissance de posture. Ce mode est connu de l'homme de métier, il fournit par exemple un numéro de code identifiant une posture mémorisée.

La figure 4 illustre le fonctionnement du mode de priorité immédiatement supérieur au précédent, c'est-à-dire le mode de sélection de menu. Une fonction de ce mode utilise l'angle de flexion $\alpha_{index}$ de la phalange la plus interne d'un doigt 12, par exemple l'index, pour faire un choix dans un menu par exemple visualisé sur un écran. Un retour visuel indique ce choix, par changement de couleur par exemple. L'intervalle de variation angulaire du doigt 12, par exemple de 0 à 90 degrés, est découpé en autant de plages angulaires 13 que de points de choix 14 dans le menu, ces plages angulaires peuvent être égales par exemple.

La figure 4 illustre un exemple de menu à cinq choix et trois positions du doigt 12 dont deux extrêmes, l'une à 0 degré et l'autre à 90 degrés par exemple. Une troisième position sélectionne par exemple le troisième choix. Une relation simple permet de déterminer le choix sélecté en fonction de l'angle de flexion $\alpha_{index}$ du doigt 12, par exemple :

$$N_{sélecté} = \text{partie entière de} \left[ \frac{\alpha_{index} \times N_{plage}}{90} \right] + 1 \qquad (1)$$

où $N_{sélecté}$ représente le numéro de choix sélectionné et $N_{plage}$ le nombre de plages angulaires 14.

Le nombre maximum de points de choix à sélectionner dans un même menu est limité par la résolution du système de mesure de l'angle $\alpha_{index}$, un gant numérique par exemple.

La figure 5 illustre le mode de fonctionnement immédiatement prioritaire au précédent, c'est-à-dire le mode de désignation d'objets ou de fonctions. Une fonction de ce mode a pour but de calculer et de donner la position du point d'intersection entre une ligne fictive 15 issue de la main 1 et l'écran 10, un retour visuel 9 matérialise par exemple le point désigné sur l'écran 10. L'origine de la ligne 15 est la position de la main 1 dans l'espace repérée par ses coordonnées dans un système d'axes X, Y, Z dont l'origine appartient à l'écran 10 par exemple, l'écran étant dans le plan défini par les axes Y, Z. La direction de la ligne 15 est fonction de l'orientation de la main 1 dans l'espace repéré par les angles $\psi$, $\theta$, $\Phi$ précédemment définis, $\psi$ indiquant par exemple la rotation autour de l'axe Z, $\theta$ autour de l'axe Y et $\Phi$ autour de l'axe X. Les coordonnées y, z dans le système d'axes Y, Z sont alors définies par les relations suivantes :

$$y = y_{main} + x_{main} \times tg(\psi) \quad (2)$$

$$z = z_{main} + x_{main}\ x\ tg(\Phi) \quad (3)$$

$x_{main}$, $y_{main}$, $z_{main}$ étant les coordonnées de la main dans le système d'axes X, Y, Z.

Le mode le plus prioritaire de l'exemple précité, le mode de commande virtuelle, fait intervenir les changements d'état de la main 1 de façon séquentielle. L'obtention d'une commande virtuelle est le résultat d'une séquence de changement d'états d'un ou plusieurs paramètres. Il est alors possible de définir des commandes de haut niveau portant par exemple sur la manipulation d'objets graphiques, telles que prendre, déplacer, poser, jeter, augmenter, diminuer notamment. Les différentes séquences composants des commandes virtuelles peuvent être décrites à l'aide de réseaux de Pétri.

La figure 6 présente un exemple d'application du procédé de dialogue gestuel selon l'invention. Un gant numérique recouvrant la main 1 transmet l'état de cette dernière à une unité de traitement interactif par l'intermédiaire par exemple d'une liaison série. Le gant numérique peut faire partie par exemple du système désigné par le nom "Data glove" et commercialisé par la Société VPL Research. Le gant numérique fournit à l'unité de traitement et à intervalles de temps réguliers, par exemple toutes les 30 ms, un message comportant par exemple le numéro de la posture reconnue, la position de la main par les coordonnées spatiales X, Y, Z, l'orientation de la main par les angles $\psi$, $\theta$, $\Phi$ et les 10 angles $\alpha_1$, ... $\alpha_{10}$ de flexion de la main.

Une frontière 16 est définie par un plan parallèle au plan de l'écran 10, positionné entre l'opérateur et l'écran à une distance Xf de celui-ci. Le plan de l'écran 10 contenant les axes Y, Z du système d'axes, la distance à l'écran est définie par la coordonnée le long de l'axe X. De même, une frontière angulaire 17 est définie par un angle d'orientation $\Phi$f compris entre un angle 0 d'origine et l'angle $\pi/2$. Ces angles sont les angles d'orientation de la main 1, par un mouvement de rotation autour du bras par exemple c'est-à-dire autour de l'axe X. A titre d'exemple, la distance Xf peut être fixée à 50 cm et l'angle $\Phi$f à $\pi/4$.

La figure 7 illustre un exemple d'algorithme de sélection de modes de fonctionnement, les paramètres testés étant la distance X de la main 1 à l'écran 10, le numéro P de la posture de la main identifiée et l'orientation de la main suivant l'angle d'orientation $\Phi$ précédemment défini. La première étape 71 de l'algorithme compare la distance X de la main avec la distance Xf. Si X est inférieur à X f, alors la main est entre la frontière 16 et l'écran 10 et le mode sélectionné est le mode de commande virtuelle 72. Dans le cas contraire, une deuxième étape 73 teste le numéro d'identification de la posture P, si P désigne l'index tendu, le mode sélectionné est le mode de désignation 74. Comme les valeurs Xf et $\Phi$f des paramètres X et $\Phi$, la posture P de l'index tendu définit une frontière. Si cette posture n'est pas celle de la main 1, une troisième étape 75 teste l'angle d'orientation $\Phi$. Si $\Phi$ est compris entre l'angle de frontière $\Phi$f et $\pi/2$, le mode de sélection de menu 76, sur l'écran interactif 10 par exemple, est désigné. Ce mode peut alors être obtenu en mettant la main à plat, paume vers le bas, et ouverte, la main étant au-delà du plan 16 de frontière défini par Xf, sa coordonnée X étant supérieure à Xf. Dans le cas contraire le mode de reconnaissance de posture 77 est sélectionné.

Le mode de reconnaissance de posture 77 est le mode par défaut. Il reconnaît par exemple un vocabulaire gestuel signifiant par exemple un acquiescement, un arrêt de procédure, un effacement d'écran, les nombres un, deux et trois.

Le mode de sélection de menu 76, décrit précédemment, permet par exemple un choix dans divers menus de confirmation en utilisant notamment la flexion de l'index.

Le mode de désignation 74 permet notamment de désigner un objet graphique tel qu'un bouton, une fenêtre ou un curseur de potentiomètre par exemple, ou tout simplement n'importe quelle région de l'écran. Ce mode de fonctionnement est obtenu en produisant la posture "index tendu", la main étant au-delà du plan 16 de frontière, c'est-à-dire que sa coordonnée X est supérieure à Xf.

Le mode de commande virtuelle, par la succession des changements d'état de la main 1 permet de générer différentes actions sur des objets graphiques virtuels, ces actions pouvant être par exemple les suivantes :

- prendre et déplacer un objet ;
- augmenter la taille d'un objet ;
- diminuer la taille d'un objet ;

- poser un objet ;
- jeter et détruire un objet.

Les différentes séquences, postures et mouvements, aboutissant à la génération de ces actions peuvent se décrire sous la forme d'un réseau de Pétri tel que l'illustre l'exemple de la figure 8. Ce réseau peut notamment servir à l'élaboration d'un automate programmable par exemple. Dans le cas d'un déplacement de fenêtre par exemple, le réseau de Pétri de la figure 8 décrit les séquences suivies.

- Ainsi à partir d'une étape 0 81, la main est avancée de manière à passer derrière la frontière 16, X devenant inférieur à Xf, il apparaît alors un réticule de désignation sur un écran interactif par exemple. Celui-ci est amené sur la fenêtre à déplacer. Une posture "Prend" signifiant l'action de prendre est produite.
- Dans une étape 1 82, une commande virtuelle "prendre" est élaborée.
- Dans une étape 2 83, une commande virtuelle "déplacer" est élaborée. La fenêtre est alors déplacée puis la posture "Prend" est abandonnée.
- Dans une étape 5 84, une commande virtuelle "poser" est élaborée. Puis la main recule pour franchir la frontière, c'est-à-dire X devient supérieur à Xf. Le réticule de désignation disparaît alors et l'état de la main retourne vers l'étape 0.

Dans un autre exemple d'application, pour détruire une fenêtre, à partir de l'étape 0, la main passe derrière la frontière, X devient inférieur à Xf, il apparaît alors le réticule de désignation sur un écran interactif par exemple. Celui-ci est amené sur la fenêtre à déplacer. La posture "Prend" signifiant l'action de prendre est produite.

- Dans l'étape 1 82, la commande virtuelle "prendre" est élaborée.
- Dans l'étape 2 83, la commande virtuelle "déplacer" est élaborée.

Puis la main recule pour franchir la frontière, X devient supérieur à Xf. Le réticule de désignation disparaît. La posture "Prend" est abandonnée.

- Dans une étape 6 85 une commande virtuelle "jeter" est élaborée puis l'état de la main retourne vers l'étape 0.

Dans un autre exemple d'application, pour augmenter la taille d'une fenêtre, à partir de l'étape 0, la main passe dernière la frontière, X devient inférieur à Xf, il apparaît alors le réticule de désignation sur un écran interactif par exemple. Celui est amené sur la fenêtre à déplacer. La posture "Prend" signifiant l'action de prendre est produite.

- Dans l'étape 1 82, la commande virtuelle "prendre" est élaborée.
- Dans l'étape 2 83, la commande virtuelle "déplacer" est élaborée.

Puis la main est tournée vers la droite de plus de $\pi/6$.

- Dans une étape 3 86, une commande virtuelle "augmenter" est élaborée.
- Dans l'étape 2 83, la commande virtuelle "déplacer" est élaborée.

Puis la posture "Prend" est abandonnée.

- Dans l'étape 5 84, la commande virtuelle "poser" est élaborée.

Puis la main recule pour franchir la frontière 16, X devenant supérieur à Xf, et l'état de la main retourne à l'étape 0.

Une application pour diminuer la taille d'une fenêtre serait par exemple identique à l'exemple précédent sauf à remplacer l'étape 3 86 par une étape 4 87 d'élaboration d'une commande virtuelle "diminuer".

**Revendications**

1. Procédé de dialogue gestuel dans un environnement virtuel utilisant des moyens de communication gestuelle (1, 2) dont l'état est défini par un ensemble de paramètres (4), caractérisé en ce qu'il utilise au moins deux modes de fonctionnement (5) mutuellement exclusifs et affectés d'un ordre de priorité, le passage d'un mode à un autre étant provoqué par une étape de franchissement d'une frontière (6, 7, 16) par les moyens de communication gestuelle (1, 2), une frontière (6, 7, 16) étant définie par la valeur d'un ou plusieurs paramètres de l'ensemble (4).

2. Procédé selon la revendication 1, caractérisé en ce qu'une frontière (6) est délimitée par une distance, un angle, une surface (16), un volume (7) ou une posture des moyens de communication gestuelle (1, 2).

3. Procédé selon l'une quelconque des revendications précédentes, caractérisé en ce qu'il utilise quatre modes de fonctionnement (5), ces modes étant, respectivement du plus prioritaire au moins prioritaire, un mode de commande virtuelle, un mode de désignation d'objets virtuels, un mode de sélection dans un menu et un mode de reconnaissance de posture.

4. Procédé selon la revendication 3, caractérisé en ce que le mode de commande virtuelle fait intervenir les changements d'état des moyens de communication gestuel de façon séquentielle, l'obtention d'une commande virtuelle étant le résultat d'une séquence de changement d'états d'un ou plusieurs paramètres.

5. Procédé selon la revendication 3, caractérisé en ce que le menu est visualisé sur un écran interactif (10).

6. Procédé selon la revendication 3, caractérisé en ce qu'un objet désigné est visualisé par un écran interactif (10).

7. Procédé selon l'une quelconque des revendicatons précédentes, caractérisé en ce qu'une frontière (6) est évolutive en fonction du temps.

8. Procédé selon l'une quelconque des revendications précédentes, caractérisé en ce que les moyens de communication gestuelle sont constitués d'une main (1) recouverte d'un gant numérique.

**Patentansprüche**

1. Verfahren für Gebärdendialog in einer virtuellen Umgebung unter Verwendung von Gebärdenkommunikationsmitteln (1, 2), deren Zustand durch eine Parametergesamtheit (4) definiert ist, dadurch gekennzeichnet, daß es wenigstens zwei sich gegenseitig ausschließende Betriebsarten (5) verwendet, denen eine Prioritätsreihenfolge zugewiesen ist, wobei der Übergang von einer Betriebsart zu einer anderen durch einen Schritt der Überschreitung einer Grenze (6, 7, 16) durch die Gebärdenkommunikationsmittel (1, 2) hervorgerufen wird, wobei eine Grenze (6, 7, 16) durch den Wert eines oder mehrerer Parameter der Gesamtheit (4) definiert ist.

2. Verfahren nach Anspruch 1, dadurch gekennzeichnet, daß eine Grenze (6) durch eine Strecke, einen Winkel, eine Fläche (16), ein Volumen (7) oder eine Haltung der Gebärdenkommunikationsmittel (1, 2) begrenzt ist.

3. Verfahren nach irgendeinem der vorangehenden Ansprüche, dadurch gekennzeichnet, daß es vier Betriebsarten (5) verwendet, wobei diese Betriebsarten von höherer zu niedrigerer Priorität eine Betriebsart eines virtuellen Befehls, eine Betriebsart einer Bezeichnung virtueller Objekte, eine Betriebsart einer Auswahl in einem Menü bzw. eine Betriebsart einer Erkennung der Haltung sind.

4. Verfahren nach Anspruch 3, dadurch gekennzeichnet, daß die Betriebsart eines virtuellen Befehls die Zustandsänderungen der Gebärdenkommunikationsmittel in sequentieller Weise einführt, wobei die Erhaltung eines virtuellen Befehls das Ergebnis einer Folge von Zustandsänderungen eines oder mehrerer Parameter ist.

5. Verfahren nach Anspruch 3, dadurch gekennzeichnet, daß das Menü auf einem interaktiven Bildschirm (10) angezeigt wird.

6. Verfahren nach Anspruch 3, dadurch gekennzeichnet, daß ein bezeichnetes Objekt durch einen interaktiven Bildschirm (10) angezeigt wird.

7. Verfahren nach irgend einem der vorangehenden Ansprüche, dadurch gekennzeichnet, daß eine Grenze (6) zeitlich veränderlich ist.

8. Verfahren nach irgendeinem der vorangehenden Ansprüche, dadurch gekennzeichnet, daß die Gebärdenkommunikationsmittel durch eine Hand (1) gebildet sind, über die ein digitaler Handschuh gezogen ist.

## Claims

1. Method of gestural dialog in a virtual environment using gestural communication means (1, 2), the state of which is defined by a set (4) of parameters, characterized in that said method uses at least two modes of' operation (5) that are mutually exclusive and assigned an order of priority, the passing from one mode to another being prompted by a step of the crossing of a boundary (6, 7, 16) by the gestural communication means (1, 2), a boundary (6, 7, 16) being defined by the value of one or more parameters of the set (4).

2. Method according to Claim 1, characterized in that a boundary (6) is demarcated by a distance, an angle, a surface (16), a volume (7) or a posture of the gestural communication means (1, 2).

3. Method according to any one of the preceding claims, characterized in that it uses four modes of operation (5), these modes being respectively, from the mode with the highest priority to the mode with the lowest priority, a virtual command mode, a virtual objects designation mode, a mode of selection in a menu and a posture recognition mode.

4. Method according to Claim 3, characterized in that the virtual command mode brings the changes of state of the gestural communication means into play sequentially, the obtaining of a virtual command being the result of a change of states sequence for one or more parameters.

5. Method according to Claim 3, characterized in that the menu is displayed on an interactive screen (10).

6. Method according to Claim 3, characterized in that a designated object is displayed by an interactive screen (10).

7. Method according to any one of the preceding claims, characterized in that a boundary (6) is capable of evolving as a function of time.

8. Method according to any one of the preceding claims, characterized in that the gestural communication means are constituted by a hand (1) covered with a digital glove.

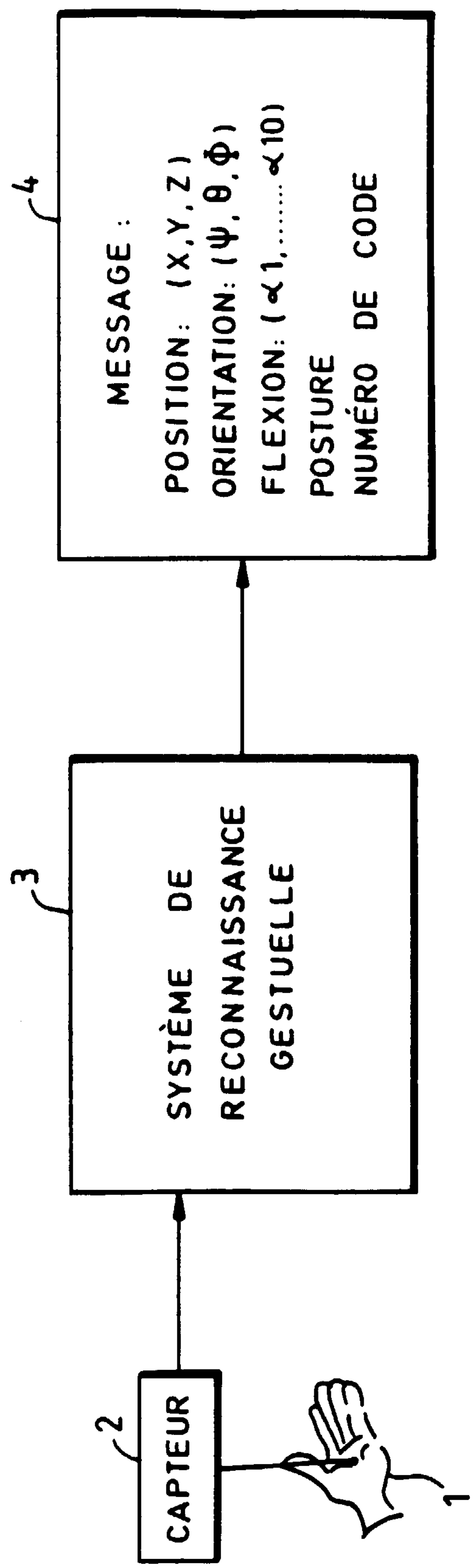
1
2
CAPTEUR
3
SYSTÈME DE
RECONNAISSANCE
GESTUELLE
4
MESSAGE :
POSITION : (X,Y,Z)
ORIENTATION : (Ψ, θ, Φ)
FLEXION : (∝1,.......∝10)
POSTURE
NUMÉRO DE CODE

FIG.1

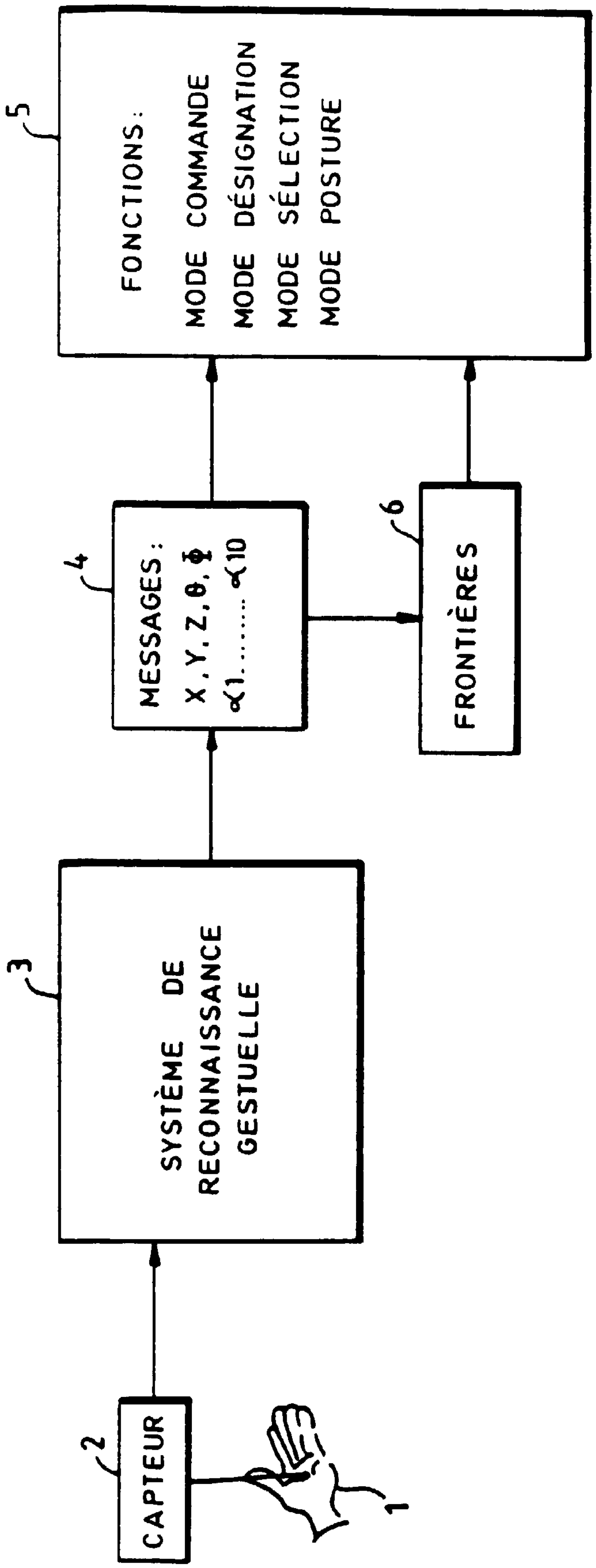
CAPTEUR
2
1
SYSTÈME DE RECONNAISSANCE GESTUELLE
3
MESSAGES :
X, Y, Z, θ, Φ
α1........α10
4
FRONTIÈRES
6
FONCTIONS :
MODE COMMANDE
MODE DÉSIGNATION
MODE SÉLECTION
MODE POSTURE
5

FIG. 2

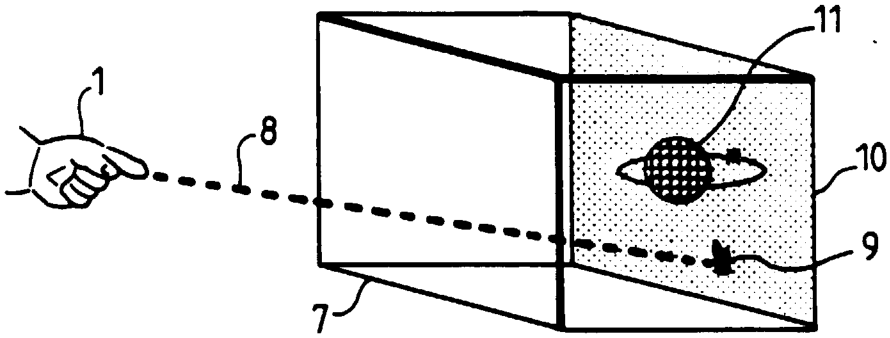


FIG. 3a

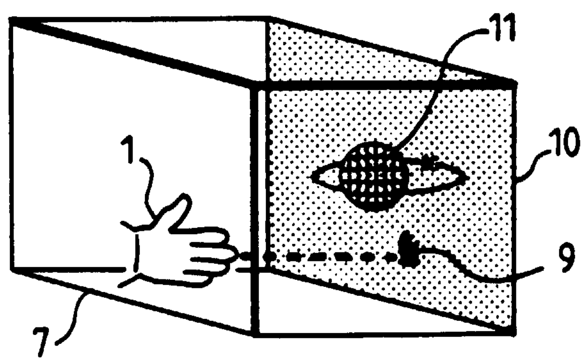


FIG. 3b

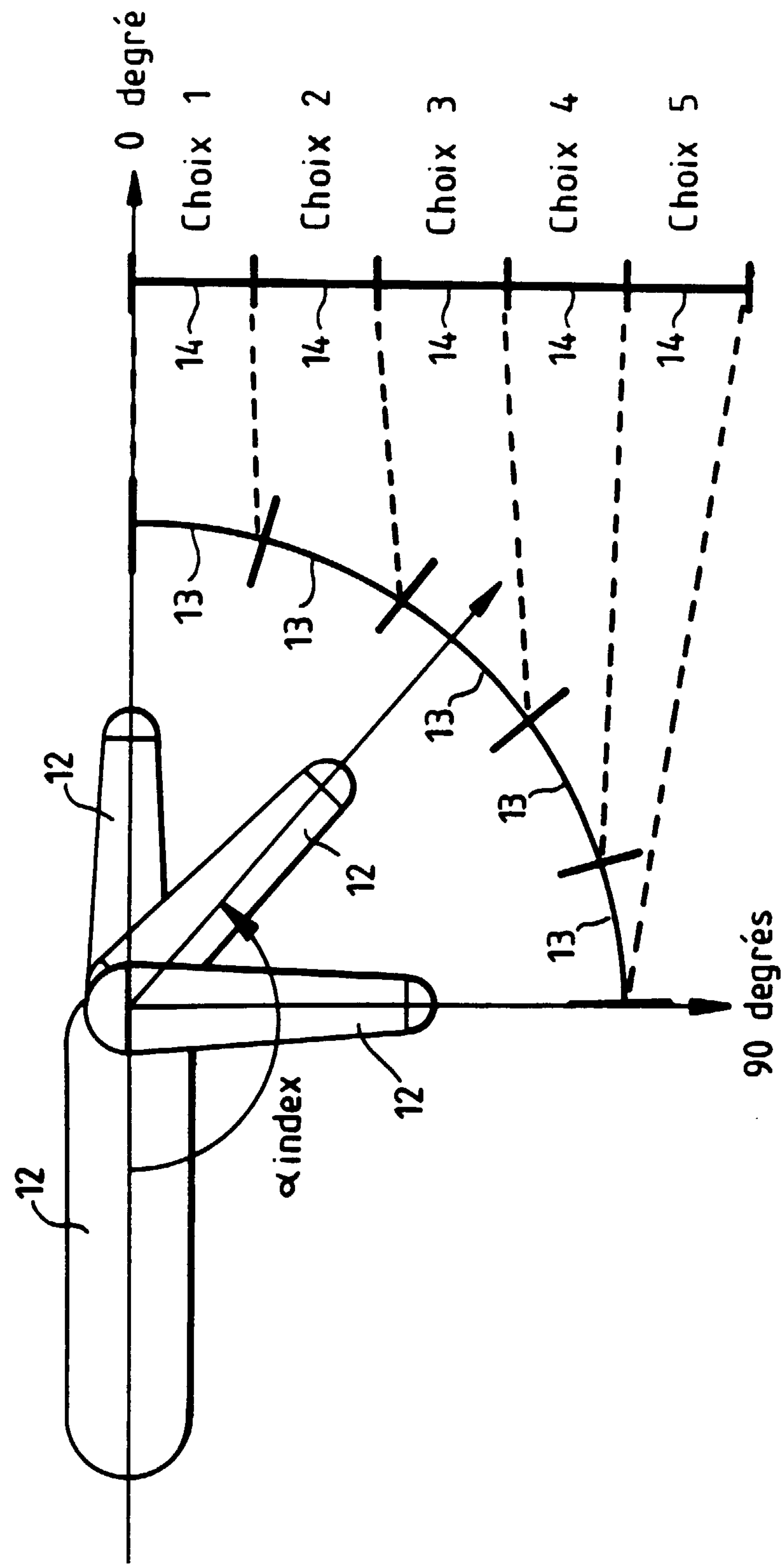
0 degré
Choix 1
Choix 2
Choix 3
Choix 4
Choix 5
14
13
12
α index
90 degrés

FIG. 4

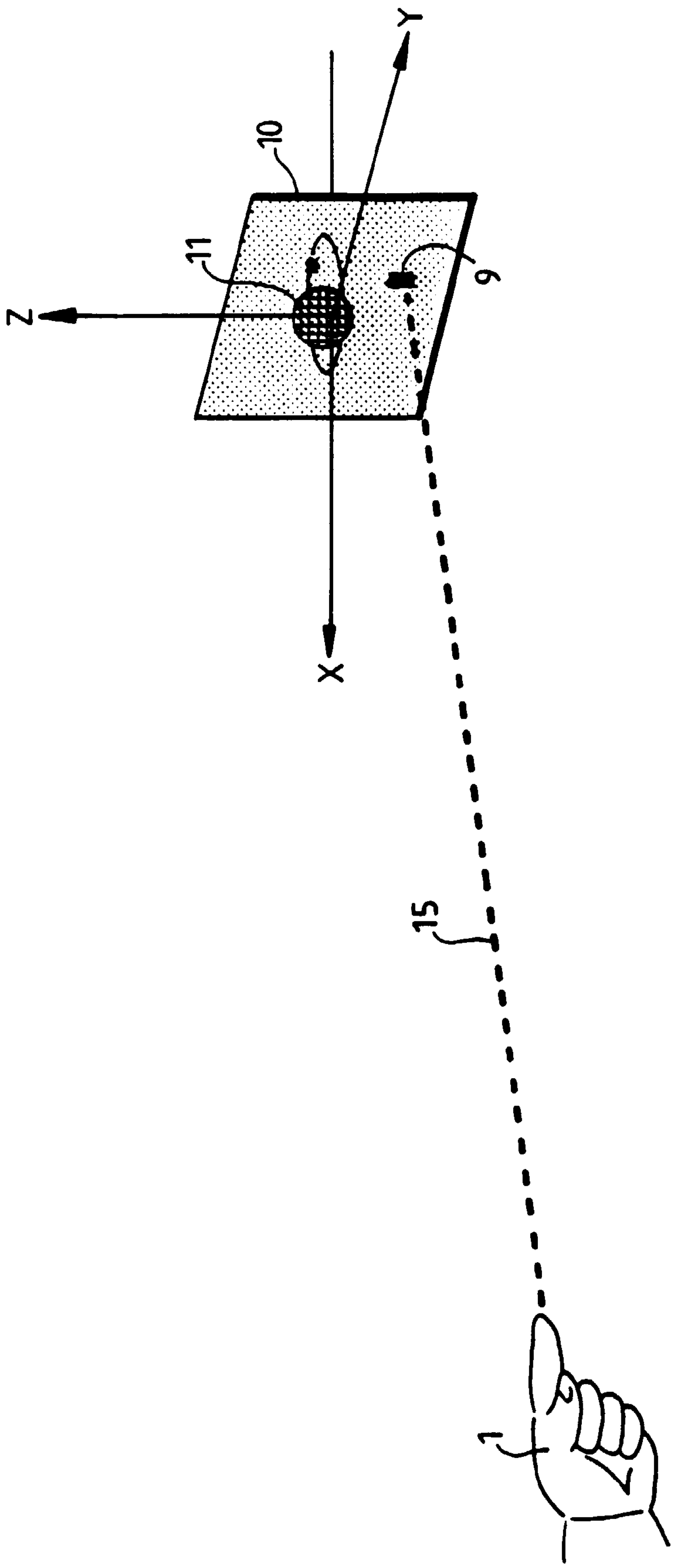


FIG. 5

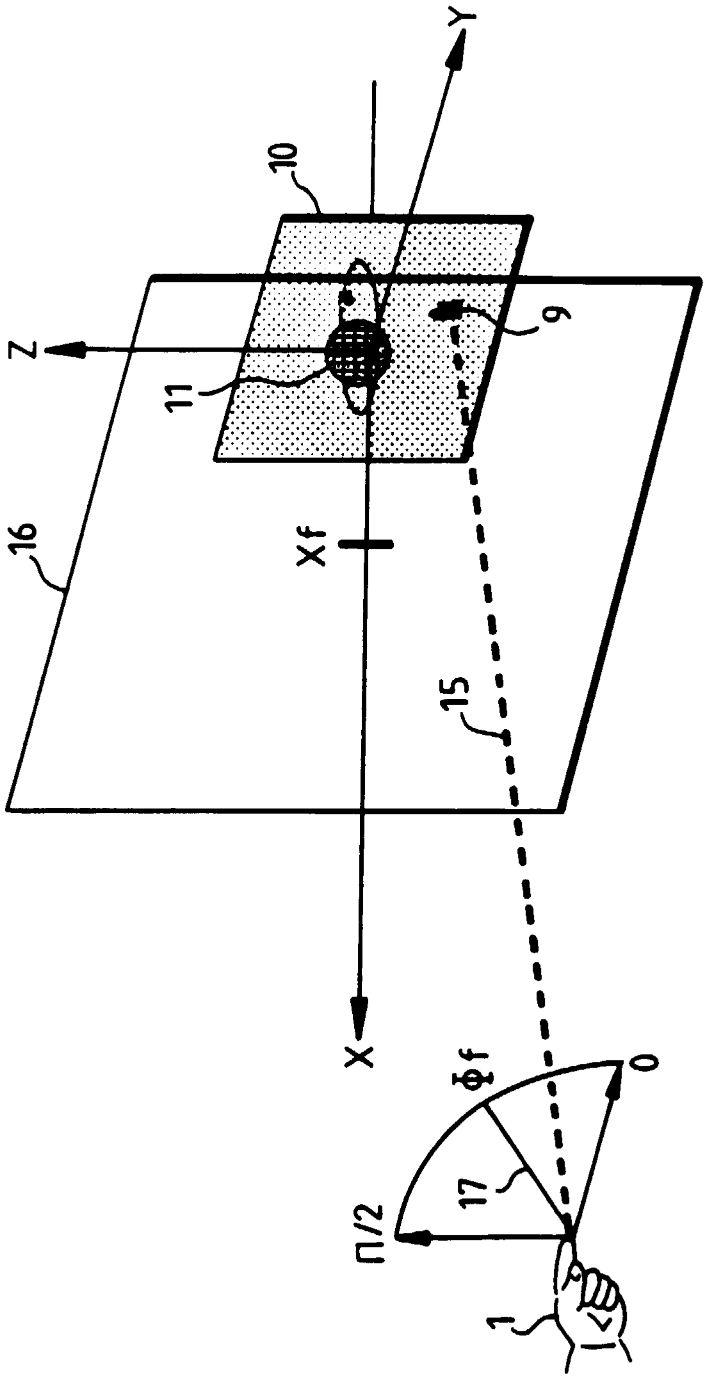


FIG. 6

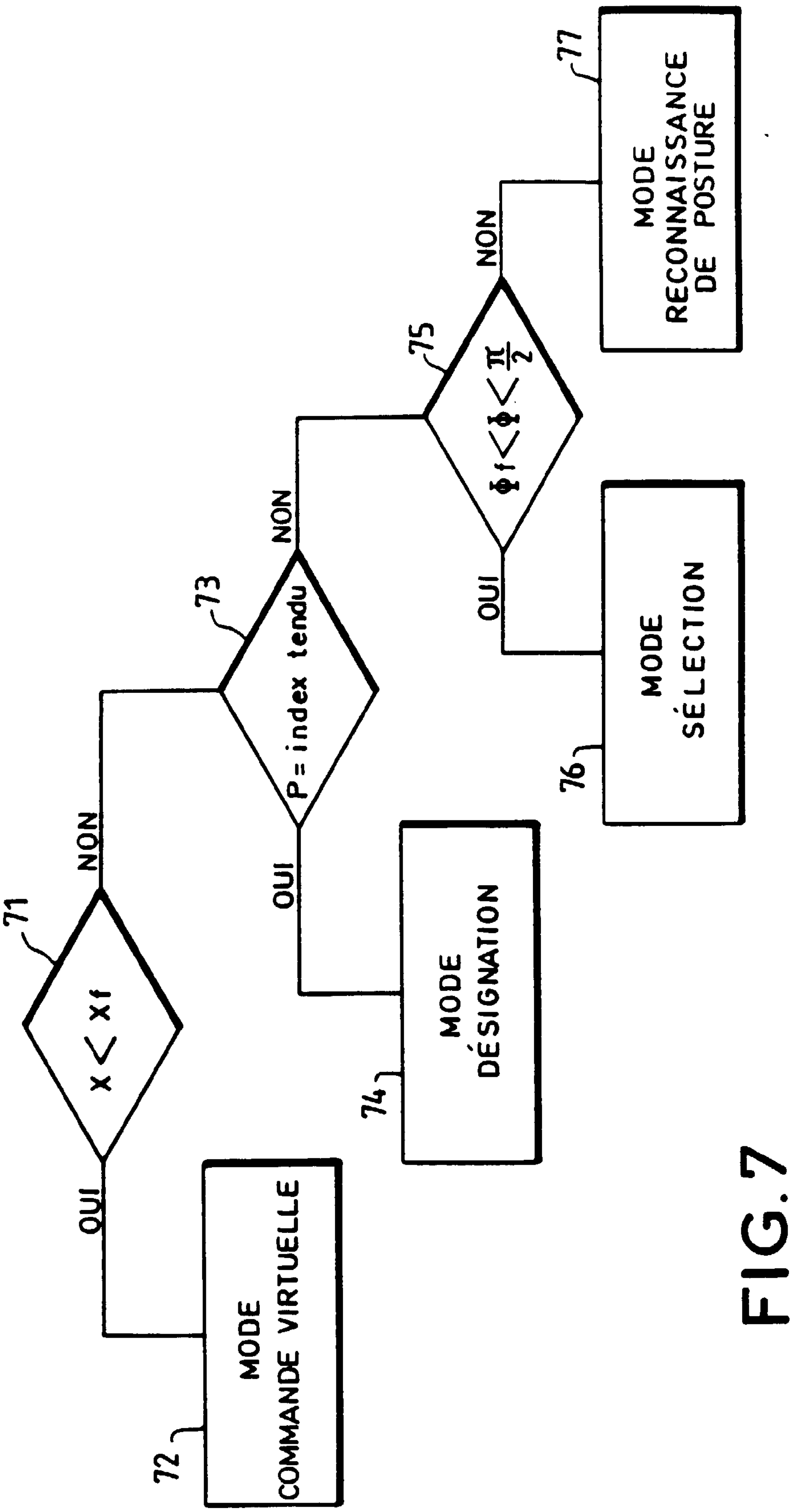
71
x < xf
OUI
NON
72
MODE
COMMANDE VIRTUELLE
73
P = index tendu
OUI
NON
74
MODE
DÉSIGNATION
75
Φf < Φ < π/2
OUI
NON
76
MODE
SÉLECTION
77
MODE
RECONNAISSANCE
DE POSTURE

FIG. 7

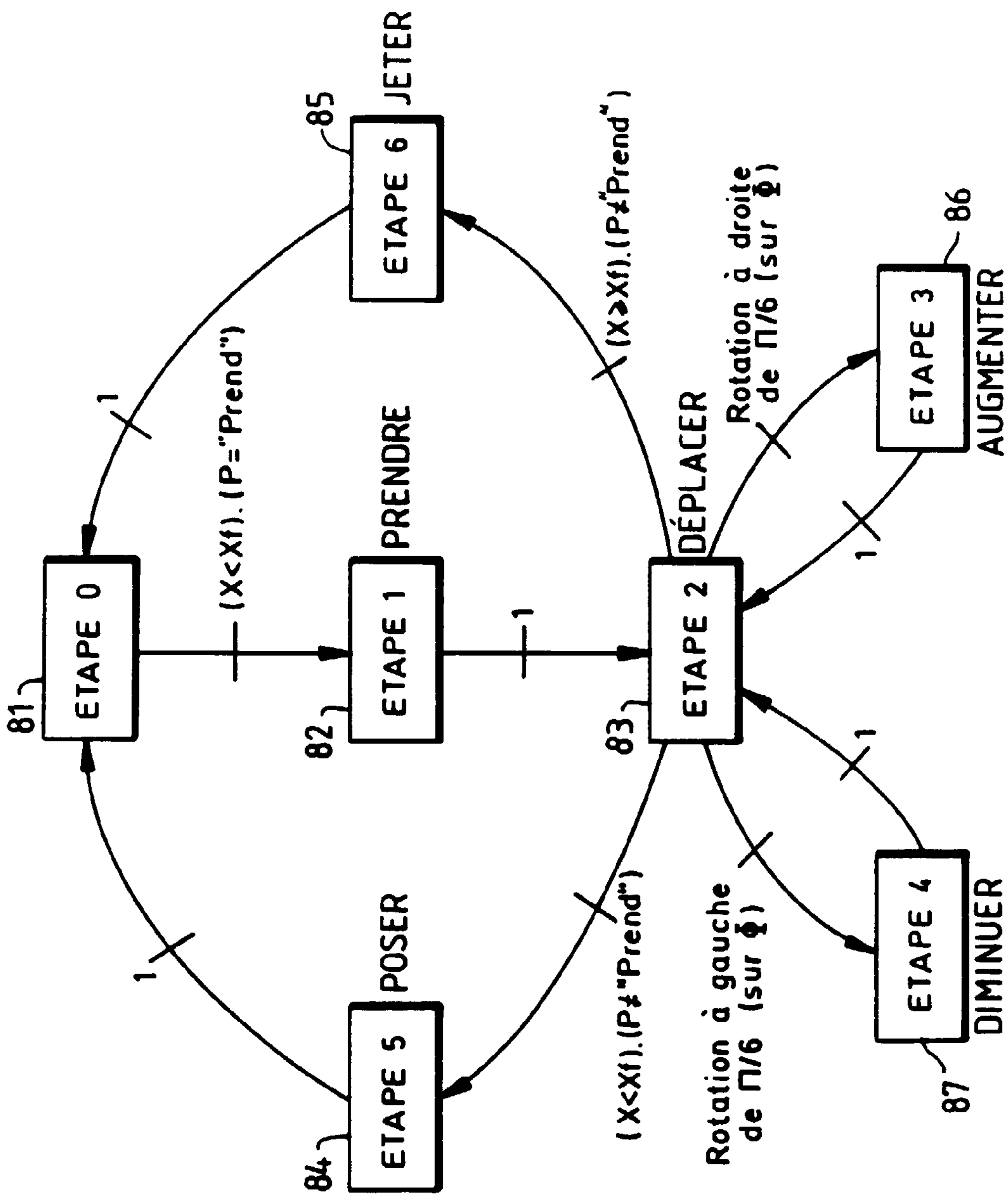
ETAPE 0
81
ETAPE 1
PRENDRE
82
ETAPE 2
DÉPLACER
83
ETAPE 3
AUGMENTER
86
ETAPE 4
DIMINUER
87
ETAPE 5
POSER
84
ETAPE 6
JETER
85
(X<Xf).(P="Prend")
(X>Xf).(P≠"Prend")
(X<Xf).(P≠"Prend")
Rotation à droite de Π/6 (sur Φ)
Rotation à gauche de Π/6 (sur Φ)
1
1
1
1
1
1

FIG. 8